# EUROPEAN PATENT APPLICATION

(11) **EP 4 057 027 A1**
(43) Date of publication of application: **14.09.2022**
(21) Application number: 22161339.1
(22) Date of filing: 10.03.2022
(51) Int. Cl.: G01S 7/481, G01S 17/894, G02B 27/09

(54) **LIDAR DEVICE**

(30) Priority: 11.03.2021 CN 202110266018
(71) Applicant: Coretronic Corporation, Hsin-Chu 300 (TW)
(72) Inventor: PAN, HAW-WOEI, Hsin-Chu 300 (TW); WENG, YI-HSUANG, Hsin-Chu 300 (TW)
(74) Representative: Ter Meer Steinmeister & Partner

(57) **Abstract**

A LIDAR device having a light-emitting end and a light-receiving end is provided. The LIDAR device includes a light source (110), a collimating lens (120) and a microlens array (130). The light source is configured to provide a light beam (L). The collimating lens is disposed on a transmission path of the light beam and to configured form the light beam into a parallel beam (PL). The microlens array is configured to form the parallel beam into a plurality of sub-beams (SL). The collimating lens is disposed between the light source and the microlens array. The luminous intensities of the sub-beams are different. Through the light-emitting end, each of the sub-beams forms a sub-spot on a reference region (OR) away from the LIDAR device, and the sub-spots formed by the sub-beams in the reference region are superimposed into an integrated light spot. The LIDAR device has a stable detection distance and good system efficiency.

## Description

This application claims the priority benefit of China application serial no. 202110266018.6, filed on March 11, 2021.

### BACKGROUND

### Technical Field

The invention relates to an optical device, particularly to a LIDAR device.

### Description of Related Art

The LIDAR device used for light detection and ranging is a method of target detection, ranging, and mapping. There are several main components in a LIDAR device, such as light sources (for example, lasers), optical devices, photon detectors and electronic components for processing signals. Specifically, the LIDAR device steers and controls a detection beam, processes the light reflected from a distant object (such as buildings and landscapes), and obtains the distance and shape of the object to describe the surroundings, so as to avoid obstacles and plan paths. Furthermore, a flash LiDAR is a solid-state LIDAR, and a diffuser is adopted by a light-emitting end of the flash LiDAR to diffuse the detection beam into light with a desired viewing angle that illuminates a large area at the same time. In addition, through the camera-like principle and the time-of-flight measurement, the flash LiDAR analyses the appearance and distance of the target through a sensor array located at a light-receiving end of the flash LiDAR.

However, in the flash LiDAR, most of the intensity distribution of the commonly-used laser and the detection beam passing through the diffuser concentrates in the center, while the intensity of the peripheral detection beam is weaker, causing the brightness distribution of the illuminated region uneven. Moreover, the uneven intensity distribution of the detection beam has less amount of light scattered back to the sensor from the contour of the target at the edge of the field of view, which may lead to misjudgement during signal analysis and inaccurate analysis of the target contour. Furthermore, a weak intensity of the detection beam that passes through the peripheral region also means that while the detection distance of the central field of view reaches a farther region, the detection distance of the peripheral field of view only reaches a closer region one.

In addition, the sensor arrays at the light-receiving end of the flash LiDAR are generally rectangular arrays, whereas the light shape formed by the laser and the diffuser is mostly oblong. Therefore, in order to use all the sensor arrays at the light-receiving end, the light-emitting surface of the light-emitting end tends to be designed larger than the light-receiving surface of the light-receiving end, resulting in a waste of system energy.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

The invention provides a LIDAR device, which has a stable detection distance and good system efficiency.

The other objectives and advantages of the present invention may be further understood from the technical features disclosed in the present invention.

The object is solved by the features of the independent claims. Preferred embodiments are given in the dependent claims.

In order to achieve one, part, or all of the above objectives or other objectives, an embodiment of the present invention provides a LIDAR device. The LIDAR device has a light-emitting end and a light-receiving end, and the LIDAR device includes a light source, a collimating lens and a microlens array. The light source is configured to provide a light beam. The collimating lens is disposed on a transmission path of the light beam and configured to form the light beam into a parallel beam. The microlens array is configured to form the parallel beam into multiple sub-beams. The collimating lens is disposed between the light source and the microlens array, wherein the luminous intensities of the sub-beams are different, and through the light-emitting end, each of the sub-beams respectively forms a sub-spot on a reference region away from the LIDAR device, and the sub-spots formed by the sub-beams in the reference region are superimposed into an integrated light spot.

In the following optional features will be provided, which could be combined singularly or in combination with the LIDAR device as described above.

In one or more embodiments, when a distance between the reference region and the LIDAR device is much larger than a light-emitting interval of the sub-beams, the sub-spot formed by the same sub-beam in the reference region may have uniform intensity.

In one or more embodiments, the integrated light spot superimposed by the sub-spots of the sub-beams formed by the parallel beam in the reference region may have uniform intensity.

In one or more embodiments, the microlens array may have a first region and a second region.

In one or more embodiments, the sub-beams may comprise a plurality of first sub-beams and a plurality of second sub-beams.

In one or more embodiments, the first sub-beams may be the sub-beams formed by the parallel beam passing through the first region.

In one or more embodiments, the second sub-beams may be the sub-beams formed by the parallel beam passing through the second region.

In one or more embodiments, the first region may be closer to an optical axis of the light beam than the second region.

In one or more embodiments, a luminous intensity of the first sub-beams may be greater than a luminous intensity of the second sub-beams.

In one or more embodiments, each of the first sub-beams may form a first sub-spot in the reference region.

In one or more embodiments, each of the second sub-beams may form a second sub-spot in the reference region.

In one or more embodiments, an intensity of the first sub-spot may be greater than an intensity of the second sub-spot.

In one or more embodiments, the integrated light spot may comprise the first sub-spot and the second sub-spot.

In one or more embodiments, the LIDAR device may further comprise a sensor.

In one or more embodiments, the sensor may be disposed on the light-receiving end.

In one or more embodiments, the collimating lens and/or the microlens array may be disposed between the light source and the light-receiving end.

In one or more embodiments, the microlens array may comprise a plurality of microlens units.

In one or more embodiments, any one of the microlens units may have a long-side dimension and a short-side dimension.

In one or more embodiments, the sensor may have a sensing surface.

In one or more embodiments, the sensing surface may have a long side and a short side.

In one or more embodiments, a ratio of a dimension of the long side and a dimension of the short side of the sensing surface may match a ratio of the long-side dimension and the short-side dimension of the microlens units.

In one or more embodiments, each of the microlens units respectively may have a lens curvature.

In one or more embodiments, the lens curvature may match the ratio of the dimension of the long side and the dimension of the short side of the sensing surface.

In one or more embodiments, each of the microlens units respectively may have a major-axis curvature and a minor-axis curvature.

In one or more embodiments, the major-axis curvature may be different from the minor-axis curvature.

In one or more embodiments, the major-axis curvature may match the dimension of the long side of the sensing surface.

In one or more embodiments, the minor-axis curvature may match the dimension of the short side of the sensing surface.

In one or more embodiments, a contour of the integrated light spot may be similar to a contour of the sensing surface.

Based on the above, the embodiments of the present invention have at least one of the following advantages or effects. In the embodiment of the present invention, through the configuration of the microlens array, the LIDAR device enables the sub-beams with different intensities passing through the microlens array to be superimposed in the reference regions at the same distance and obtains a more uniform field of view. In this way, the integrated light spot with uniform intensity may be formed in the reference region. In this way, the LIDAR device has a stable detection distance, no matter the target is at the center or the periphery of the parallel beam. In addition, the integrated light spot with uniform intensity may also facilitate the analysis of the contour of the target in the reference region, thereby improving the accuracy of detection. In addition, with the configuration of the microlens array, the contour of the integrated light spot of the LIDAR device is similar to the contour of the sensing surface. In this way, the LIDAR device may reduce the energy waste of the emitting surface where the light shape of the light beam passing through the light-emitting end does not match the contour of the sensing surface, thereby improving the system efficiency.

Other objectives, features and advantages of the present invention will be further understood from the further technological features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of a light beam during detection of a LIDAR device according to an embodiment of the present invention.
FIG. 2A is a schematic diagram of the optical path of the LIDAR device of FIG. 1.
FIG. 2B is an exploded schematic diagram of a plurality of sub-spots in the reference region of the LIDAR device of FIG. 1.
FIG. 2C is a schematic diagram of the optical path of the sensor provided on the light-receiving end of FIG. 1 that receives the integrated light spot from the reference region.
FIG. 2D is an exploded schematic diagram of the sensor provided on the light-receiving end of FIG. 1 and the contour of the integrated light spot received by the sensor.

### DESCRIPTION OF THE EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the present invention may be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the present invention. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A "Component is directly "adjacent to" "B" component or one or more additional components are between "A" component and "B" component. Accordingly, the drawings and descriptions will be regarded as illustrative in nature and not as restrictive.

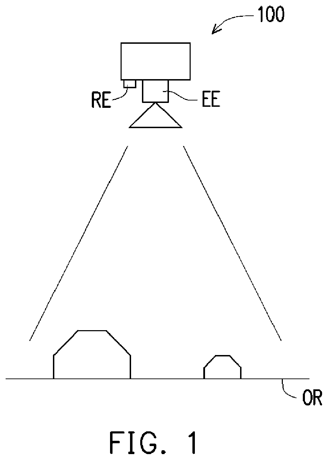

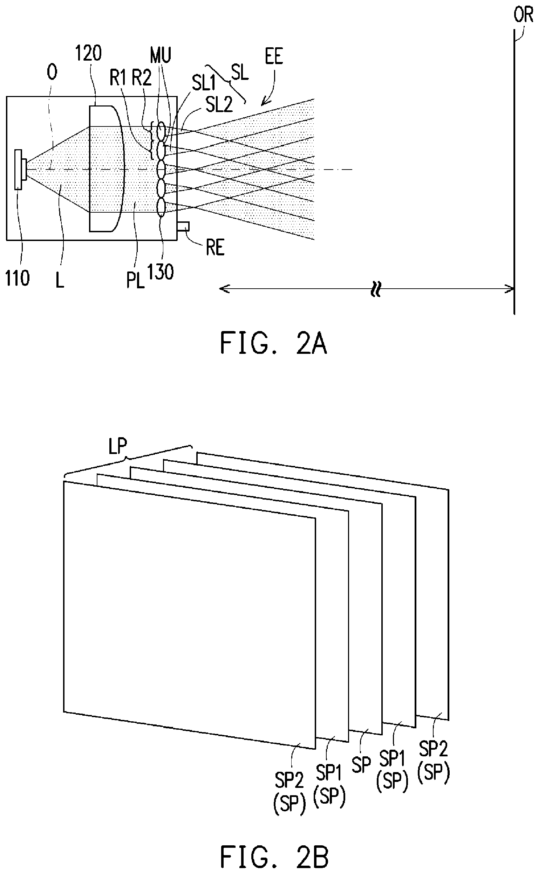

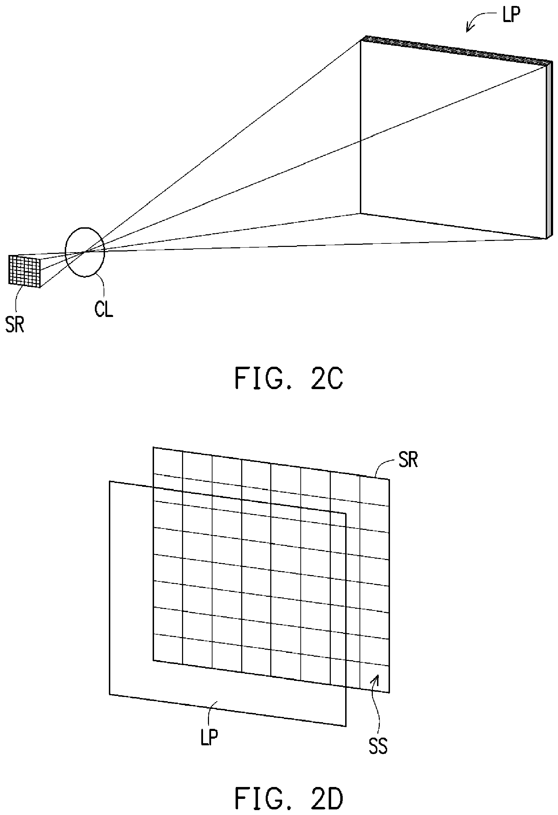

FIG. 1 is a schematic diagram of a light beam during detection of a LIDAR device according to an embodiment of the present invention. FIG. 2A is a schematic diagram of the optical path of the LIDAR device of FIG. 1. FIG. 2B is an exploded schematic diagram of a plurality of sub-spots in the reference region of the LIDAR device of FIG. 1 FIG. 2C is a schematic diagram of the optical path of the sensor provided on the light-receiving end of FIG. 1 that receives the integrated light spot from the reference region. And FIG. 2D is an exploded schematic diagram of the sensor provided on the light-receiving end of FIG. 1 and the contour of the integrated light spot received by the sensor. In FIG. 1 to FIG. 2A, a LIDAR device 100 has a light-emitting end EE and a light-receiving end RE, and the LIDAR device 100 includes a light source 110, a collimating lens 120 and a microlens array 130. The light source 110 is configured to provide a light beam L. The collimator lens 120 is disposed on a transmission path of the light beam L and configured form the light beam L into a parallel beam PL. The microlens array 130 is configured to form the parallel beam PL into a plurality of sub-beams SL, and the collimating lens 120 is disposed between the light source 110 and the microlens array 130, wherein the luminous intensities of the sub-beams SL are different. Specifically, each of the sub-beams SL respectively forms a sub-spot SP in the reference region OR away from the optical device 100 through the light-emitting end EE. For example, in this embodiment, the reference region OR may be the surface of the object to be scanned in advance, or may be a predetermined detection region.

Furthermore, as shown in FIG. 2A, in this embodiment, the microlens array 130 has a first region R1 and a second region R2, the sub-beam SL includes a first sub-beam SL1 and a second sub-beam SL2. The first sub-beam SL1 is the sub-beam SL formed by the parallel beam PL passing through the first region R1, the second sub-beam SL2 is the sub-beam SL formed by the parallel beam PL passing through the second region R2, the first region R1 is closer to an optical axis O of the light beam L than the second region R2, and the luminous intensity of the first sub-beam SL1 is greater than the luminous intensity of the second sub-beam SL2. Moreover, in this embodiment, the microlens array 130 includes a plurality of microlens units MU, and any one of the microlens units MU has a long-side dimension and a short-side dimension. In this way, as shown in FIG. 2B, the contour of the sub-spot SP formed by the sub-beam SL of the microlens unit MU may be shaped into a rectangle.

As shown in FIG. 2B, in this embodiment, the first sub-beam SL1 forms a first sub-spot SP1 in the reference region OR, the second sub-beam SL2 forms a second sub-spot SP2 in the reference region OR, and the intensity of the first sub-spot SP1 is greater than the intensity of the second sub-spot SP2. Moreover, in this embodiment, when the distance between the reference region OR and the optical device 100 is much larger than the light-emitting interval of the sub-beams SL, the light-emitting interval between the first sub-beam SL1 and the second sub-beam SL2 may be omitted, and therefore, the position of the first sub-spot SP1 in the reference region OR and the position of the second sub-spot SP2 in the reference region OR are approximately overlapped, and may be configured to form an integrated light spot LP. That is, the sub-spots SP formed by the sub-beams SL formed by the parallel beam PL in the reference region OR may be superimposed into the integrated light spot LP. The integrated light spot LP includes the first sub-spot SP1 and the second sub-spot SP2 that have different intensities.

Moreover, in this embodiment, when the distance between the reference region OR and the optical device 100 is much larger than the light-emitting interval SL of the sub-beams, each of the sub-spots SP formed by the same sub-beams SL in the reference region OR has a uniform intensity. In other words, the intensity of the sub-spot SP formed by the same sub-beam SL at various places in the reference region OR is the same. Here, the phrase "the same" means that when the distance between the reference region OR and the optical device 100 is much larger than the light-emitting interval of the sub-beams SL, the same sub-beam SL may be regarded as the point light source 110, such that the illuminance in the same interval at a long distance is similar, and therefore the intensities of the sub-spots SP at different positions in the reference region OR are similar, or even close to being the same.

In this way, even if the intensity of the parallel beam PL is not uniform, through the configuration of the microlens array 130, the LIDAR device 100 may still superimpose the sub-beams SL with different intensities in the reference region OR at the same distance and obtain a field of view with relatively uniform intensity, and the intensities of the sub-spots SP formed by the same sub-beam SL everywhere in the reference region OR are the same. In this way, the integrated light spot LP of the sub-spots SP of the sub-beams SL formed by the parallel beam PL in the reference region OR has a uniform intensity. Hence, when the distance between the reference region OR and the LIDAR device 100 is much larger than the light-emitting interval of the sub-beams SL, the intensity of the integrated light spot LP at different positions of the reference region OR is similar.

Accordingly, the LIDAR device 100 has a stable detection distance, no matter the target is at the center or the periphery of the parallel beam PL. And the integrated light spot LP with uniform intensity may also facilitate the analysis of the target contour in the reference region OR, thereby improving the detection accuracy.

On the other hand, as shown in FIG. 2A, FIG. 2C, and FIG. 2D, in this embodiment, the optical device 100 further includes a sensor SR, which is configured on the light-receiving end RE. For example, the sensor SR is configured on a housing of the LIDAR device 100 and is located at a position deviated from the optical axis O. And, as shown in FIG. 2A, the collimating lens 120 and the microlens array 130 are configured between the light source 110 and the light-receiving end RE. In this way, the integrated light spot LP that is reflected and returned by the reference region OR may be collected by a focusing lens CL and then directly received by the sensor SR located at the light-receiving end RE. Furthermore, as shown in FIG. 2C and FIG. 2D, the sensor SR has a sensing surface SS. The sensing surface SS has a long side and a short side, and the ratio of the dimension of the long side and the dimension of the short side of the sensing surface SS matches the ratio of the long-side dimension and the short-side dimension of the microlens unit MU. Moreover, in this embodiment, each of the microlens units MU respectively has a lens curvature, and the lens curvature may be designed based on the dimension of the sensing surface SS to match the ratio of the dimension of the long side and the dimension of the short side of the sensing surface SS.

In other embodiments, each of the microlens units MU may also be a non-circularly symmetric lens, that is, each of the microlens units MU has a different curvature in the horizontal direction and the vertical direction (not shown in the figures). Under such circumstance, each of the microlens units MU respectively has, for example, a major-axis curvature and a minor-axis curvature, and the major-axis curvature and the minor-axis curvature are different, the major-axis curvature matches the dimension of the long side of the sensing surface SS, and the minor-axis curvature matches the dimension of the short side of the sensing surface SS. In this way, the ratio of the sub-spot SP may be adjusted by the different magnifications of the microlens unit MU in the horizontal direction and the vertical direction.

Specifically, in this embodiment, the dimension of the integrated light spot LP received by the sensor SR may be equal to the dimension of the sensing surface SS, or may become larger in proportion. For example, in this embodiment, the dimension of the long side and the short side of the sensing surface SS may respectively be 16 mm and 9 mm, and the dimension of the integrated light spot LP received by the sensor SR may be 16.8 mm and 9.45 mm. Furthermore, considering the existence of tolerances in system component and assembly, the dimension of the integrated light spot LP received by the sensor SR may be slightly larger than the dimension of the long side and the short side of the sensing surface SS, and the actual dimension change may be as follows: to increase the dimension of the integrated light spot LP received by the sensor SR by a few millimeters on the long side and the short side, the range of the integrated light spot LP received by the sensor SR may be designed to be slightly smaller than the range of the sensing surface SS.

Hence, as shown in FIG. 2C and FIG. 2D, the contour of the sub-spot SP formed by the sub-beam SL passing through the microlens unit MU matches and be similar to the contour of the sensing surface SS, so that the contour of the integrated light spot LP is similar to the contour of the sensing surface SS. In this way, the viewing angle of the light-emitting end EE of the LIDAR device 100 (that is, the divergence angle of each of the sub-beams SL) may match the viewing angle of the light-receiving end RE (that is, the divergence angle of each of the sub-beams SL), reducing the energy waste of the emitting surface where the light shape of the light beam L passing through the light-emitting end EE does not match the contour of the sensing surface SS, thereby improving the system efficiency.

In summary, the embodiments of the present invention have at least one of the following advantages or effects. In the embodiments of the present invention, through the configuration of the microlens array, the LIDAR device enables the sub-beams with different intensities passing through the microlens array to be superimposed in the reference regions at the same distance and obtains a more uniform field of view, and thereby forms an integrated light spot with uniform intensity in the reference region. Accordingly, the LIDAR device has a stable detection distance, no matter the target is at the center or the periphery of the parallel beam, and the integrated light spot with uniform intensity may also facilitate the analysis of the target contour in the reference region, thereby improving the detection accuracy. In addition, with the configuration of the microlens array, the contour of the integrated light spot of the LIDAR device is similar to the contour of the sensing surface. In this way, the LIDAR device may reduce the energy waste of the emitting surface where the light shape of the light beam passing through the light-emitting end does not match the contour of the sensing surface, thereby improving the system efficiency.

The foregoing description of the preferred of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A LIDAR device, having a light-emitting end (EE) and a light-receiving end (RE), and the LIDAR device comprising:
a light source (110), configured to provide a light beam (L);
a collimating lens (120), disposed on a transmission path of the light beam (L) and configured to form the light beam (L) into a parallel beam (PL); and
a microlens array (130), configured to form the parallel beam (PL) into a plurality of sub-beams (SL), the collimating lens (120) is disposed between the light source (110) and the microlens array (130), wherein luminous intensities of the sub-beams (SL) are different, each of the sub-beams (SL) respectively form a sub-spot (SP) on a reference region (OR) away from the LIDAR device (100) through the light-emitting end (EE), and the sub-spots (SP) formed by the sub-beams (SL) in the reference region (OR) are superimposed into an integrated light spot (LP).

2. The LIDAR device according to claim 1, wherein when a distance between the reference region (OR) and the LIDAR device (100) is larger than a light-emitting interval of the sub-beams (SL) and/or the sub-spot (SP) formed by the same sub-beam (SL) in the reference region (OR) has uniform intensity.

3. The LIDAR device according to claim 1 or 2, wherein the integrated light spot (LP) superimposed by the sub-spots (SP) of the sub-beams (SL) formed by the parallel beam (PL) in the reference region (OR) has uniform intensity.

4. The LIDAR device according to any one of the preceding claims, wherein the microlens array (130) has a first region (R1) and a second region (R2).

5. The LIDAR device according to claim 4, wherein the sub-beams (SL) comprise a plurality of first sub-beams (SL1) and a plurality of second sub-beams (SL2), the first sub-beams (SL1) are the sub-beams (SL) formed by the parallel beam (PL) passing through the first region (R1), the second sub-beams (SL2) are the sub-beams (SL) formed by the parallel beam (PL) passing through the second region (R2).

6. The LIDAR device according to claim 4 or 5, wherein the first region (R1) is closer to an optical axis (O) of the light beam (L) than the second region (R2), and/or a luminous intensity of the first sub-beams (SL1) is greater than a luminous intensity of the second sub-beams (SL2).

7. The LIDAR device according to claim 4, 5 or 6, wherein each of the first sub-beams (SL1) forms a first sub-spot (SP1) in the reference region (OR), each of the second sub-beams (SL2) forms a second sub-spot (SP2) in the reference region (OR) and/or an intensity of the first sub-spot (SP1) is greater than an intensity of the second sub-spot (SP2) and/or the integrated light spot (LP) comprises the first sub-spot (SP1) and the second sub-spot (SP2).

8. The LIDAR device according to any one of the preceding claims, further comprising a sensor (SR), preferably the sensor (SR) is disposed on the light-receiving end (EE), and/or the sensor (SR) has a sensing surface (SS), preferably the sensing surface (SS) has a long side and a short side,

9. The LIDAR device according to any one of the preceding claims, wherein the collimating lens (120) and the microlens array (130) are disposed between the light source (110) and the light-receiving end (EE).

10. The LIDAR device according to any one of the preceding claims, wherein the microlens array (130) comprises a plurality of microlens units (MU), preferably any one of the microlens units (MU) has a long-side dimension and a short-side dimension.

11. The LIDAR device according to claims 8 and 10, wherein a ratio of a dimension of the long side and a dimension of the short side of the sensing surface (SS) of the sensor (SR) matches a ratio of the long-side dimension and the short-side dimension of the microlens units (MU).

12. The LIDAR device according to claims 8 and 10, wherein each of the microlens units (MU) respectively has a lens curvature, and the lens curvature matches the ratio of the dimension of the long side and the dimension of the short side of the sensing surface (SS).

13. The LIDAR device according to claim 10, 11 or 12, wherein each of the microlens units (MU) respectively has a major-axis curvature and a minor-axis curvature, preferably the major-axis curvature is different from the minor-axis curvature.

14. The LIDAR device according to claim 13, wherein the major-axis curvature matches the dimension of the long side of the sensing surface (SS), and the minor-axis curvature matches the dimension of the short side of the sensing surface (SS).

15. The LIDAR device according to any one of the claims 8, 11, 12, wherein a contour of the integrated light spot (LP) is similar to a contour of the sensing surface (SS).
